# EUROPÄISCHE PATENTSCHRIFT

(11) **EP 2 196 076 B1**
(45) Veröffentlichungstag und Bekanntmachung des Hinweises auf die Patenterteilung: **05.01.2011**
(21) Anmeldenummer: 08838420.1
(22) Anmeldetag: 24.09.2008
(51) Int. Cl.: H05K 7/20, G08C 17/02, B60R 16/023, G01D 11/24

(54) **DATENÜBERTRAGUNGSMODUL**
DATA TRANSMISSION MODULE
MODULE DE TRANSMISSION DE DONNÉES

(30) Priorität: 01.10.2007 DE 102007047080
(43) Veröffentlichungstag der Anmeldung: 16.06.2010
(73) Patentinhaber: Robert Bosch GmbH, 70442 Stuttgart (DE)
(72) Erfinder: DUBITZKY, Wilrid, 70435 Stuttgart (DE); MEERWEIN, Matthias, 70439 Stuttgart (DE); TRIESS, Burkhard, 71636 Ludwigsburg (DE)
(86) Internationale Anmeldenummer: PCT/EP2008/062777
(87) Internationale Veröffentlichungsnummer: WO 2009/047122

(56) Entgegenhaltungen:
- EP-A- 1 780 094
- AT-U2- 8 651
- DE-A1- 19 903 065
- US-B1- 6 201 700

## Beschreibung

### Stand der Technik

Die Erfindung bezieht sich auf ein Datenübertragungsmodul mit einem Gehäuse, einer zur Verbindung mit einer Messeinheit dienenden Kabelanschlusseinheit einerseits und einer zur drahtlosen Datenübertragung dienenden Antenneneinheit andererseits.

Ein als bekannt angenommenes Datenübertragungsmodul dieser Art dient zum Aufnehmen von mittels einer Messeinheit gewonnenen Messdaten über die Kabelanschlusseinheit und die Datenübertragung zur Weiterverarbeitung bzw. Auswertung über die drahtlose Datenübertragungsstrecke auf eine anwenderseitige Datenverarbeitungseinrichtung. Ein Modul dieser Art ist aus der AT 008 651 U2 bekannt. Jedoch ist die Datenübertragung insbesondere in der Umgebung eines Motors zahlreichen Störeinflüssen unterworfen, die eine zuverlässige Datenübertragung schwierig machen.

Die Entwicklung von Steuergeräten insbesondere für die Automobilindustrie ist eine komplexe Aufgabe und erfordert den Einsatz einer Vielzahl von Entwicklungswerkzeugen und Messtechnik. Um das gewünschte Verhalten der Steuer- und Regelfunktionen einzustellen und zu überwachen, müssen die Parameter der Funktionen kalibriert und die zugehörigen Varianten gemessen werden. Für diese Mess-und Kalibrationsanwendungen werden verschiedene Werkzeuge verwendet, beispielsweise Applikationssysteme für den Zugriff auf Steuergerätedaten oder Module für die Erfassung von Sensorwerten. Die Erfassung und Übertragung der Sensorwerte beispielsweise im Motorraum eines Fahrzeugs ist Störungen durch Hitze- und Kälteeinflüssen sowie Staub und Feuchtigkeit ausgesetzt.

Die Datenübertragung zwischen der Messtechnik im Fahrzeug und dem Rechner des prüfenden Anwenders erfolgt überwiegend drahtgebunden. Der Anwender sitzt dabei häufig im Insassenraum, und die Kabel werden durch die Spritzwand des Fahrzeugs verlegt oder über die Außenseite des Fahrzeugs durch die Fenster nach innen geführt. Für diese Zwecke muss die Spritzwand des Fahrzeugs durchbohrt bzw. die Motorhaube aufgebogen werden.

Dagegen kann mittels einer drahtlosen Datenübertragung, beispielsweise über WLAN, Bluetooth oder WUSB, der Aufwand, der durch die Kabelverlegung entsteht, verringert und eine Beschädigung vermieden werden. Module für drahtlose Datenübertragung können z. B. als externe Module angeboten oder direkt in die Messtechnik integriert werden. Bei der drahtlosen Übertragung treten aber die vorstehend genannten Störeinflüsse auf, die schwer zu beseitigen sind.

Der Erfindung liegt die Aufgabe zugrunde, ein Datenübertragungsmodul der eingangs genannten Art bereit zu stellen, mit dem auch bei störenden Umgebungsbedingungen eine möglichst zuverlässige Datenübertragung erreicht wird.

### Offenbarung der Erfindung

### Vorteile der Erfindung

Diese Aufgabe wird mit den Merkmalen des Anspruches 1 gelöst. Hierbei ist vorgesehen, dass das Gehäuse aus einem hohlen ersten Gehäuseteil aus wärmeleitfähigem Material und einem die Antenneneinheit zumindest teilweise umgebenden hohlen zweiten Gehäuseteil aus einem hitzebeständigen und für elektromagnetische Wellen durchlässigen Material besteht und dass die beiden Gehäuseteile mit einer Koppelseite an dem ersten Gehäuseteil und einer komplementären Koppelseite an dem zweiten Gehäuseteil lösbar miteinander verbunden sind. Eine vorteilhafte Verwendung eines derartigen Datenübertragungsmoduls ergibt sich im Motorraum eines Fahrzeugs in Verbindung mit einer am Motor angeordneten Messeinheit.

Die angegebenen Maßnahmen ermöglichen den Einsatz drahtloser Übertragungstechnik unter extremen Umgebungsbedingungen, wie sie im Motorraum eines Fahrzeuges herrschen. Die Zweiteilung des Gehäuses ermöglicht sowohl die Abfuhr von Wärme über die wärmeleitfahige Gehäusehälfte aus dem wärmeleitfähigen Material, insbesondere Metall, als auch den ungehinderten Durchlass elektromagnetischer Wellen durch die Gehäusehälfte aus dem betreffenden, hitzebeständigen Material, wie z. B. Kunststoff. Durch diesen Aufbau können die Antennen direkt im Inneren des Gehäuses untergebracht werden, so dass das Modul eine kompakte Bauform erhält. Im Gehäuse angeordnete Antennen sind geschützt untergebracht und können nicht beschädigt werden bzw. abbrechen.

Eine für den Aufbau und die Funktion vorteilhafte Ausbildung besteht darin, dass der erste Gehäuseteil aus Metall und der zweite Gehäuseteil aus Kunststoff bestehen.

Die Handhabung wird dadurch begünstigt, dass die Kabelanschlusseinheit eine Steckverbindereinheit mit einem an dem ersten Gehäuseteil angebrachten Steckverbinderteil aufweist.

Eine für den Aufbau und die Funktion vorteilhafte Ausgestaltung besteht darin, dass die Antenneneinheit auf einer in dem ersten Gehäuseteil, insbesondere wärmeleitend angebrachten Platine, angeordnet ist, die mit der Antenneneinheit in den zweiten Gehäuseteil ragt.

Dabei zeichnet sich eine vorteilhafte Ausführungsform dadurch aus, dass die Antenneneinheit mindestens eine Planarantenne aufweist.

Zu einer wirkungsvollen Wärmeabfuhr tragen die Maßnahmen bei, dass der erste Gehäuseteil auf mindestens einem äußeren Gehäuseabschnitt mit Kühlrippen versehen ist, wodurch gleichzeitig auch eine erhöhte Stabilität erreicht wird.

Störeinflüsse durch Temperatur werden des Weiteren dadurch unterdrückt, dass die Platine zur Kühlung mit mindestens einem Kupferblock und/oder einem Peltier-Kühlelement versehen ist, dessen Kaltseite mindestens einem zu kühlenden Bauteil zugeordnet und dessen Warmseite mit dem ersten Gehäuseteil wärmeleitend verbunden ist. Der Kupferblock ist wärmeleitend einerseits mit dem Bauteil und andererseits mit dem ersten Gehäuseteil, vorzugsweise dessen Kühlkörper, verbunden.

Zu einer zuverlässigen Funktion tragen des Weiteren die Maßnahmen bei, dass zwischen die Koppelseitc und die komplementäre Koppelseite eine umlaufende Dichtung zum Feuchtigkeits- und/oder Staubschutz eingebracht ist, und des Weiteren, dass der Steckverbinder feuchtigkeits- und/oder staubdicht ausgebildet ist.

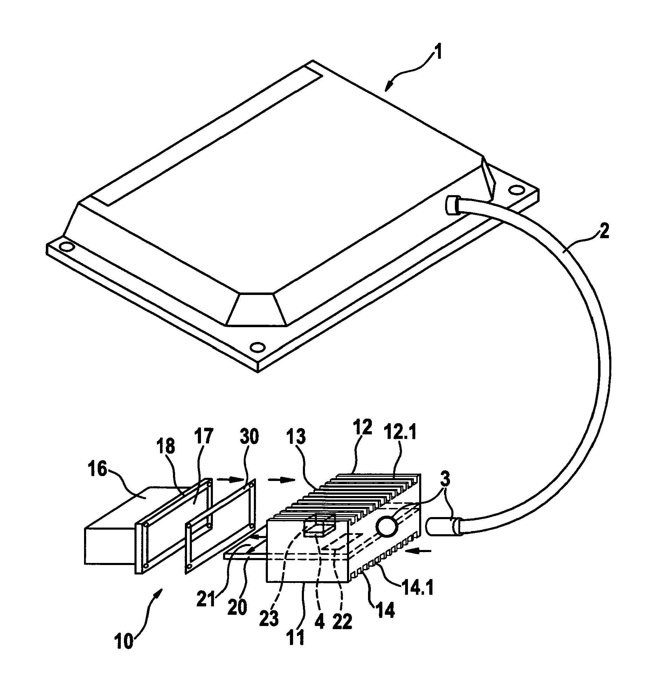

### Kurze Beschreibung der Zeichnung

Die Erfindung wird nachfolgend anhand von Ausführungsbeispielen unter Bezugnahme auf die Zeichnung näher erläutert.

### Ausführungsform der Erfindung

Die Fig. zeigt eine Messanordnung mit einem Steuergerät 1, das z. B. im Motorraum eines Fahrzeugs angeordnet ist, und einem daran über ein Verbindungskabel 2 angeschlossenes Datenübertragungsmodul 10, mit dem drahtlos Daten an einen nicht gezeigten Rechner eines Applikationssystems zur Datenverarbeitung bzw. Auswertung, beispielsweise für Prüfzwecke, übertragen, d.h. gesendet und/oder empfangen werden können. Bei dem Steuergerät 1 handelt es sich beispielsweise um ein solches mit integriertem Emulationstastkopf oder eine andere Messeinheit als Beispiel für Messtechnikanwendungen in einem Fahrzeug, insbesondere in dessen Motorraum.

Das Datenübertragungsmodul 10 ist aus zwei hohlen Gehäuseteilen, nämlich einem ersten Gehäuseteil 11 mit Wärmeableitungseigenschaften und einem für elektromagnetische Wellen durchlässigen zweiten Gehäuseteil 16 zusammengesetzt, die staub- und feuchtigkeitsdicht miteinander verbunden sind. Dabei sind der ansonsten geschlossene erste Gehäuseteil 11 auf einer eine Öffnung umgebenden Koppelseite 13 und der ansonsten geschlossene zweite Gehäuseteil 16 auf einer eine Öffnung umgebenden komplementären Koppelseite 17 unter Zwischenlage einer Dichtung 30 feuchtigkeits- und staubdicht verbunden, beispielsweise verschraubt. Dazu sind die Koppelseite 13 und die komplementäre Koppelseite 17 mit einem jeweiligen umlaufenden Dichtrand versehen. An dem ersten Gehäuseteil 11, vorliegend an deren von der Koppelseite 13 abgelegenen Rückwand, ist ein Steckverbinderteil einer Steckverbindereinheit 3 eingebaut, die ebenfalls staub- und feuchtigkeitsdicht ausgeführt ist zum Anschluss des Verbindungskabels 2. Auf der Außenseite des ersten Gehäuseteils 11, nämlich vorliegend auf der Oberseite 12 und dem Boden 14 sind Kühlrippen 12.1 bzw. 14.1 ausgebildet, um eine erhöhte Wärmeabfuhr des wärmeleitfähigen, vorzugsweise aus Metall ausgebildeten ersten Gehäuseteils 11 zu erreichen. Derartige Kühlrippen können beispielsweise auch auf den Seitenwänden 15 und/oder der Rückwand des ersten Gehäuseteils 11 angeordnet sein.

Im Inneren des ersten Gehäuseteils 11 ist eine Platine 20 montiert, die wärmeleitend mit dem metallischen ersten Gehäuseteil 11 verbunden ist und Bauteile 4 für die Aufnahme und Aufbereitung der zu übertragenden Daten trägt. Zur Kühlung mittels Wärmeableitung sind die Bauteile 4 vorteilhaft über Kupferblöcke 23 mit dem ersten Gehäuseteil 11 wärmeleitend verbunden. Bei den Daten kann es sich zum einen um von dem Steuergerät bzw. der Messeinheit 1 aufgenommene und über das Verbindungskabel 2 weitergeleitete Sensorwerte oder z. B. um Steuerparameter handeln, die von dem anwenderseitigen Rechner abgegeben und nach entsprechender Aufbereitung zu dem Steuergerät bzw. der Messeinheit 1 übertragen werden. In dem ersten Gehäuseteil 11, nämlich vorliegend auf der Platine 20, sind Antennen einer Antenneneinheit 21 angeordnet, die vorteilhaft als Planarantennen ausgebildet sind. Ein die Antenneneinheit 21 tragender Abschnitt der Platine 20 ragt aus der Öffnung auf der Koppelseite 13 des ersten Gehäuseteils 11 hervor und wird bei angekoppeltem zweiten Gehäuseteil 16 durch die auf der komplementären Koppelseite 17 vorhandene Öffnung in den Hohlraum des zweiten Gehäuseteils 16 eingeführt, so dass die elektromagnetischen Wellen durch die vorzugsweise aus Kunststoff, etwa aus Epoxidharz, bestehende Wandung des zweiten Gehäuseteils 16 praktisch ungehindert abgestrahlt bzw. empfangen werden können.

Ferner können auf der Platine 20 im Bereich temperaturempfindlicher oder eine hohe Verlustwärme erzeugender Bauteile 4 zusätzlich oder alternativ zu den Kupferblöcken 23 Peltier-Elemente 22 angeordnet sein, deren kühle Seite dem Bauteil zugeordnet ist und deren warme Seite mit der ersten Gehäusehälfte 11 wärmeleitend verbunden ist. Mit den Peltier-Elementen 22 wird die Kühlung der betreffenden Bauteile zusätzlich unterstützt.

Mit dem (bezüglich der Messeinheit 1) externen Datenübertragungsmodul 10 wird zum einen ein zuverlässiger Datenaustausch zwischen dem Datenübertragungsmodul 10 und der Messtechnik, beispielsweise im Motorraum eines Fahrzeugs, erreicht, die sich in unmittelbarer Nähe zu einer Wärmequelle befindet, über das Verbindungskabel drahtgebunden abgewickelt. Durch ein entsprechend langes Kabel kann gewährleistet werden, dass das Datenübertragungsmodul 10 in größerer Entfernung von der Wärmequelle, beispielsweise dem Motorblock, angebracht werden kann. Dabei ist das Material der beiden Gehäuseteile 11 und 16, insbesondere also auch des die elektromagnetischen Wellen durchlässigen Gehäuseteils, hitzebeständig, und zwar besteht der zweite Gehäuseteil 16 vorzugsweise aus hitzebeständigem Kunststoff wie Epoxidharz.

Die Datenübertragung zu und von dem anwenderseitigen Rechner erfolgt über die Antenneneinheit 21.

Die beschriebenen Maßnahmen ermöglichen den Einsatz drahtloser Übertragungstechnik unter extremen Bedingungen, wie sie insbesondere im Motorraum eines Fahrzeugs herrschen. Die Zweiteilung des Gehäuses ermöglicht sowohl die Abfuhr von Wärme über die wärmeleitfähige Gehäusehälfte bzw. den ersten Gehäuseteil 11 aus Metall als auch den Durchlass elektromagnetischer Wellen durch die Gehäusehälfte bzw. den zweiten Gehäuseteil 16 aus dem hitzebeständigen Kunststoff. Durch diese Anordnung können die Antennen der Antenneneinheit 21 direkt im Inneren des Gehäuses untergebracht werden, so dass das Datenübertragungsmodul 10 eine kompakte Bauform erhält. Externe Antennen, die leicht abbrechen können, werden vermieden.

## Patentansprüche

1. Datenübertragungsmodul (10) mit einem Gehäuse, einer zur Verbindung mit einer Messeinheit (1) dienenden Kabelanschlusseinheit einerseits und einer zur drahtlosen Datenübertragung dienenden Antenneneinheit (21) andererseits,
**dadurch gekennzeichnet,**
**dass** das Gehäuse aus einem hohlen ersten Gehäuseteile (11) aus wärmeleitfahigem Material und einem die Antenneneinheit (21) zumindest teilweise umgebenden hohlen zweiten Gehäuseteil (16) aus einem hitzebeständigen und für elektromagnetische Wellen durchlässigen Material besteht und
**dass** die beiden Gehäuseteile (11, 16) mit einer Koppelseite (13) an dem ersten Gehäuseteil (11) und einer komplementären Koppelseite (17) an dem zweiten Gehäuseteil (16) lösbar miteinander verbunden sind.

2. Datenübertragungsmodul nach Anspruch 1,
**dadurch gekennzeichnet,**
**dass** der erste Gehäuseteil (11) aus Metall und der zweite Gehäuseteil (16) aus Kunststoff bestehen.

3. Datenübertragungsmodul nach Anspruch 1 oder 2,
**dadurch gekennzeichnet,**
**dass** die Kabelanschlusseinheit eine Steckverbindereinheit (3) mit einem an dem ersten Gehäuseteil (11) angebrachten Steckverbinderteil aufweist.

4. Datenübertragungsmodul nach einem der vorhergehenden Ansprüche,
**dadurch gekennzeichnet,**
**dass** die Antenneneinheit (21) auf einer in dem ersten Gehäuseteil (11), insbesondere wärmeleitend angebrachten Platine (20) angebracht ist, die mit der Antenneneinheit (21) in den zweiten Gehäuseteil (16) ragt.

5. Datenübertragungsmodul nach Anspruch 4,
**dadurch gekennzeichnet,**
**dass** die Antenneneinheit (21) eine Planarantenne aufweist.

6. Datenübertragungsmodul nach einem der vorhergehenden Ansprüche,
**dadurch gekennzeichnet,**
**dass** der erste Gehäuseteil (11) auf mindestens einem äußeren Gehäuseabschnitt mit Kühlrippen (12.1, 14.1) versehen ist.

7. Datenübertragungsmodul nach einem der Ansprüche 4 bis 6,
**dadurch gekennzeichnet,**
**dass** die Platine (20) zur Kühlung mit mindestens einem Kupferblock (23) und/oder Peltier-Kühlelement (22) versehen ist, dessen Kaltseite mindestens einem zu kühlenden Bauteil (4) zugeordnet und dessen Warmseite mit dem ersten Gehäuseteil (11) wärmeleitend verbunden ist.

8. Datenübertragungsmodul nach einem der vorhergehenden Ansprüche,
**dadurch gekennzeichnet,**
**dass** zwischen die Koppelseite (13) und die komplementäre Koppelseite (17) eine umlaufende Dichtung (30) zum Feuchtigkeits- und/oder Staubschutz eingebracht ist.

9. Datenübertragungsmodul nach einem der Ansprüche 3 bis 8,
**dadurch gekennzeichnet,**
**dass** der Steckverbinder (3) feuchtigkeits- und/oder staubdicht ausgebildet ist.

10. Verwendung eines Datenübertragungsmoduls nach einem der vorhergehenden Ansprüche im Motorraum eines Fahrzeugs in Verbindung mit einer am Motor angeordneten Messeinheit.

## Claims

1. Data transmission module (10) having a housing, a cable connection unit, on the one hand, which is used for connection to a measuring unit (1) and an antenna unit (21), on the other hand, which is used for wireless data transmission,
**characterized**
**in that** the housing consists of a hollow first housing part (11) made of thermally conductive material and a hollow second housing part (16) which at least partially surrounds the antenna unit (21) and is made of a heat-resistant material which is transparent to electromagnetic waves, and in that the two housing parts (11, 16) are releasably connected to one another by a coupling side (13) on the first housing part (11) and a complementary coupling side (17) on the second housing part (16).

2. Data transmission module according to Claim 1,
**characterized**
**in that** the first housing part (11) consists of metal and the second housing part (16) consists of plastic.

3. Data transmission module according to Claim 1 or 2,
**characterized**
**in that** the cable connection unit has a plug connector unit (3) having a plug connector part which is fitted to the first housing part (11).

4. Data transmission module according to one of the preceding claims,
**characterized**
**in that** the antenna unit (21) is fitted to a printed circuit board (20) which is fitted, in particular in a thermally conductive manner, in the first housing part (11) and projects, with the antenna unit (21), into the second housing part (16).

5. Data transmission module according to Claim 4,
**characterized**
**in that** the antenna unit (21) has a planar antenna.

6. Data transmission module according to one of the preceding claims,
**characterized**
**in that** the first housing part (11) is provided with cooling ribs (12.1, 14.1) on at least one external housing section.

7. Data transmission module according to one of Claims 4 to 6,
**characterized**
**in that**, for the purpose of cooling, the printed circuit board (20) is provided with at least one copper block (23) and/or Peltier cooling element (22) whose cold side is assigned to at least one component (4) to be cooled and whose warm side is connected to the first housing part (11) in a thermally conductive manner.

8. Data transmission module according to one of the preceding claims,
**characterized**
**in that** a circumferential seal (30) for moisture and/or dust protection is introduced between the coupling side (13) and the complementary coupling side (17).

9. Data transmission module according to one of Claims 3 to 8,
**characterized**
**in that** the plug connector (3) is moisture-proof and/or dust-proof.

10. Use of a data transmission module according to one of the preceding claims in the engine compartment of a vehicle in conjunction with a measuring unit arranged on the engine.

## Revendications

1. Module (10) de transfert de données doté d'un boîtier, d'une unité de raccordement de câble qui la relie à une unité de mesure (1), d'une part, et d'une unité d'antenne (21) qui sert à transférer des données sans fil, d'autre part,
**caractérisé en ce que**
le boîtier est constitué d'une première partie creuse (11) de boîtier, en un matériau conducteur de chaleur, et d'une deuxième partie creuse (16) de boîtier qui entoure au moins partiellement l'unité d'antenne (21), en un matériau qui présente une bonne tenue à la chaleur et est transparent vis-à-vis des ondes électromagnétiques et
**en ce que** les deux parties (11, 16) de boîtier sont reliées de manière libérable l'une à l'autre par un côté d'accouplement (13) prévu sur la première partie (11) du boîtier et un côté complémentaire d'accouplement (17) prévu sur la deuxième partie (16) du boîtier.

2. Module de transfert de données selon la revendication 1, **caractérisé en ce que** la première partie (11) du boîtier est réalisée en métal et la deuxième partie (16) du boîtier en matière synthétique.

3. Module de transfert de données selon la revendication 1 ou 2, **caractérisé en ce que** l'unité de raccordement de câble présente une unité (3) de connecteur enfichable doté d'une pièce de connecteur enfichable placée sur la première partie (11) du boîtier.

4. Module de transfert de données selon l'une des revendications précédentes, **caractérisé en ce que** l'unité d'antenne (21) est placée sur une carte (20), en particulier thermiquement conductrice, placée dans la première partie (11) du boîtier et qui s'enfonce avec l'unité d'antenne (21) dans la deuxième partie (16) du boîtier.

5. Module de transfert de données selon la revendication 4, **caractérisé en ce que** l'unité d'antenne (21) présente une antenne plane.

6. Module de transfert de données selon l'une des revendications précédentes, **caractérisé en ce que** la première partie (11) du boîtier est dotée de nervures de refroidissement (12.1, 14.1) sur au moins une partie extérieure du boîtier.

7. Module de transfert de données selon l'une des revendications 4 à 6, **caractérisé en ce que** pour son refroidissement, la carte (20) est dotée d'au moins un bloc de cuivre (23) et/ou d'un élément Peltier (22) de refroidissement dont le côté froid est associé à au moins un composant (4) à refroidir et dont le côté chaud est relié de manière thermiquement conductrice à la première partie (11) du boîtier.

8. Module de transfert de données selon l'une des revendications précédentes, **caractérisé en ce qu'**un joint d'étanchéité périphérique (30) qui assure la protection contre l'humidité et/ou la poussière est prévu entre le côté d'accouplement (13) et le côté complémentaire d'accouplement (17).

9. Module de transfert de données selon l'une des revendications 3 à 8, **caractérisé en ce que** le connecteur enfichable (3) est étanche à l'humidité et/ou à la poussière.

10. Utilisation d'un module de transfert de données selon l'une des revendications précédentes dans l'espace prévu pour le moteur dans un véhicule, en association avec une unité de mesure disposée sur le moteur.
